# FASCICULE DE BREVET EUROPEEN

(11) **EP 2 926 088 B1**
(45) Date de publication et mention de la délivrance du brevet: **14.08.2019**
(21) Numéro de dépôt: 13795733.8
(22) Date de dépôt: 22.11.2013
(51) Int. Cl.: G01C 19/56, G01C 25/00

(54) **PROCEDE DE CALIBRATION D'UNE CENTRALE INERTIELLE A PLAGE DE RETOURNEMENT MECANIQUE LIMITEE**
VERFAHREN ZUR KALIBRIERUNG EINES TRÄGHEITSNAVIGATIONSSYSTEMS MIT BEGRENZTEM MECHANISCHEM DREHBEREICH
METHOD FOR CALIBRATING AN INERTIAL NAVIGATION SYSTEMWITH A LIMITED MECHANICAL TURNING RANGE

(30) Priorité: 28.11.2012 FR 1203213
(43) Date de publication de la demande: 07.10.2015
(73) Titulaire: Safran Electronics & Defense, 92100 Boulogne-Billancourt (FR)
(72) Inventeur: SALAÜN, Erwan, 92100 BOULOGNE-BILLANCOURT (FR)
(74) Mandataire: Lavialle, Bruno François Stéphane
(86) Numéro de dépôt international: PCT/EP2013/074515
(87) Numéro de publication internationale: WO 2014/082937

(56) Documents cités:
- EP-A1- 0 392 104
- WO-A1-2011/083511
- FR-A1- 2 965 345
- SHKEL A M: "Type I and Type II Micromachined Vibratory Gyroscopes", POSITION, LOCATION, AND NAVIGATION SYMPOSIUM, 2006 IEEE/ION CORONADO, CA APRIL 25-27, 2006, PISCATAWAY, NJ, USA,IEEE, 25 avril 2006 (2006-04-25), pages 586-593, XP010924976, DOI: 10.1109/PLANS.2006.1650648 ISBN: 978-0-7803-9454-4 cité dans la demande

## Description

La présente invention concerne un procédé de calibration d'une centrale inertielle destinée à être montée sur un véhicule. Le véhicule peut être un véhicule terrestre, un aéronef, un navire, dont la navigation nécessite la connaissance de la position, de la vitesse et de l'attitude (cap, roulis et tangage). L'invention concerne plus particulièrement les centrales inertielles à gyroscopes vibrants axisymétriques.

Une centrale de navigation inertielle moderne comprend généralement un coeur inertiel. Le coeur inertiel comprend des capteurs inertiels tels que des gyroscopes et des accéléromètres disposés selon les axes du repère de mesure. Les gyroscopes mesurent des rotations angulaires du repère de mesure par rapport à un référentiel inertiel et fournissent l'attitude du véhicule dans le référentiel géographique après application de termes de correction visant par exemple à compenser la rotation de la Terre et le déplacement du porteur par rapport à la Terre. Les accéléromètres mesurent des accélérations qui sont projetées dans le référentiel géographique puis intégrées une première fois pour fournir la vitesse, puis une seconde fois pour fournir la position. La précision d'une centrale de navigation inertielle dépend directement des erreurs des capteurs inertiels, et plus précisément de la projection de ces erreurs dans le repère géographique local et, dans le cas d'une navigation inertielle de longue durée, les erreurs de position dépendent de manière prépondérante de la précision des gyroscopes. La précision des gyroscopes est affectée par les erreurs de dérive (décalage à l'origine de la vitesse de rotation mesurée), de codage angulaire (perturbation de la mesure de l'angle de vibration), de facteurs d'échelle (l'erreur de facteur d'échelle est l'erreur sur le coefficient multiplicateur de la vitesse de rotation mesurée), et de calage d'axes (erreur d'orthogonalité entre les axes de mesure) .

Dans les coeurs inertiels, il est notamment connu d'utiliser des gyroscopes à résonateur vibrant. Les gyroscopes vibrants sont axisymétriques à effet Coriolis (CVG pour « Coriolis Vibratory Gyroscopes »), par exemple à résonateur hémisphérique (GRH ou HRG pour « Hemispherical Resonance Gyroscopes »), et sont plus généralement dits de type I comme dans le document « Type I and Type II micromachined vibratory gyroscopes » de Andrei M. Shkel, pages 586-593, IEEE/ION (pour « Institute of Electrical and Electronics Engineer/ Institute Of Navigation ») PLANS 2006, San Diego, CA, USA. Ces gyroscopes fonctionnent soit en boucle ouverte, et ils permettent alors de mesurer un angle de rotation absolu sur la base d'une mesure d'un angle représentant la position de la vibration du résonateur par rapport à des électrodes de mesure (angle électrique), soit en boucle fermée et ils permettent alors de mesurer une vitesse de rotation sur la base d'une mesure d'un courant nécessaire au maintien de l'angle électrique à une valeur donnée. Les mesures fournies par ces gyroscopes vibrants peuvent être entachées d'erreurs ou instabilités qui sont essentiellement fonction de la position de la vibration par rapport aux électrodes de mesure. Ces erreurs sont donc variables en fonction de la position de vibration représentée par l'angle électrique.

Ces erreurs sont généralement déterminées lors d'une opération de calibration réalisée en usine, puis mémorisées afin qu'elles soient prises en compte lors des mesures effectuées au cours du fonctionnement ultérieur des gyroscopes.

Cependant, dans certaines applications, les centrales inertielles sont stockées pendant un temps relativement longs, typiquement plusieurs mois, avant d'être installées dans le véhicule pour y être utilisées immédiatement après l'installation. Or, les erreurs évoluent au cours du stockage entraînant l'obligation de procéder à une nouvelle calibration entre l'installation et l'utilisation des centrales inertielles.

La calibration peut être réalisée en faisant physiquement pivoter le coeur inertiel autour de plusieurs axes non concourants. Ceci nécessite de monter le coeur inertiel sur un dispositif de retournement multiaxe avant d'installer le tout sur le véhicule, comme par exemple illustré dans les documents EP0392104, FR2965345 et WO2011/083511.

Toutefois, un dispositif de retournement multiaxe présente un encombrement et une masse incompatibles avec certains véhicules de petites dimensions. Dans ce cas, l'opération de calibration est effectuée avant installation du coeur inertiel dans le véhicule, ce qui empêche de faire la calibration juste avant l'utilisation du véhicule. La validité de la calibration réalisée dépendra alors entre autres du temps qui s'est écoulé entre la calibration et l'utilisation du véhicule.

Un but de l'invention est de fournir un moyen de calibration permettant d'améliorer la précision des centrales inertielles.

A cet effet, on prévoit, selon l'invention, un procédé de calibration d'une centrale inertielle selon la revendication 1.

Ainsi, les vibrations des gyroscopes tournent du fait du pivotement du coeur inertiel. Comme les codages angulaires et les dérives sont principalement des fonctions sinusoïdales de l'angle électrique (ou d'un de ses multiples), il est possible, au cours du pivotement ou lors des paliers statiques, de déterminer et donc d'éliminer une grande partie des erreurs de codage angulaire et de dérive des gyroscopes projetées suivant l'axe du pivotement. Les codages angulaires et les dérives de chacun des gyroscopes évolueront sinusoïdalement à une fréquence dépendant de l'angle entre l'axe sensible (ou axe de mesure) desdits gyroscopes par rapport à l'axe de pivotement. En outre, du fait de la non-colinéarité de l'axe de retournement avec l'axe sensible des gyroscopes, il existe un rapport multiplicatif entre l'angle de pivotement physique et la modification, résultant du pivotement physique, de la valeur de l'orientation angulaire de l'axe de vibration. Par exemple, un pivotement de 270° du coeur inertiel autour de l'axe de pivotement entraîne une modification de 90° de l'orientation angulaire de l'axe de vibration. Or, pour que la calibration soit la plus efficace, il faut que la modification de l'orientation angulaire totale de l'axe de vibration soit la plus grande possible et dépasse si possible 180°. L'alternance du pivotement physique et du réglage de l'orientation angulaire permet d'ajouter la modification de l'orientation angulaire résultant du premier pivotement à la modification de l'orientation angulaire résultant du deuxième pivotement. Ceci permet d'améliorer les performances des centrales inertielles pour un coût relativement faible, ce qui est particulièrement intéressant avec les centrales inertielles à bas coûts.

De préférence, une alternance de pivotements et de réglage de l'angle électrique est réalisée jusqu'à ce que l'angle électrique ait une valeur égale à 360°.

Ceci permet d'obtenir la calibration la plus efficace.

D'autres caractéristiques et avantages de l'invention ressortiront à la lecture de la description qui suit d'un mode de mise en oeuvre particulier non limitatif de l'invention.

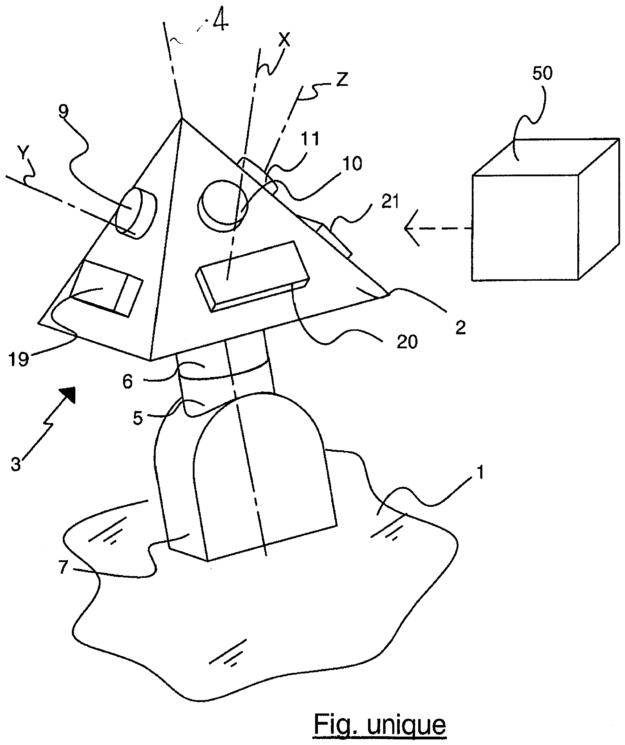

Il sera fait référence à la figure unique annexée représentant schématiquement et en perspective une centrale inertielle permettant la mise en oeuvre du procédé de l'invention.

En référence à la figure, la centrale inertielle de l'invention comprend une plateforme 1 permettant la fixation de la centrale inertielle à un véhicule. La plateforme 1 supporte un carrousel 2 portant un coeur inertiel 3 auquel est associé un repère ayant trois axes X, Y, Z. La centrale inertielle est agencée pour déterminer l'orientation de ce repère par rapport à trois axes d'un repère inertiel fixe dont l'origine est indifférente, par exemple ici le centre de la terre. Deux des axes du référentiel inertiel sont orientés dans un plan sensiblement horizontal, et le dernier axe est orienté sensiblement selon la verticale vers le haut.

Le coeur inertiel 3 comprend trois gyroscopes 9, 10, 11 et trois accéléromètres 19, 20, 21. Les gyroscopes 9, 10, 11 sont des gyroscopes vibrants axisymétriques comportant chacun un résonateur hémisphérique maintenu en vibration. Le bord circulaire du résonateur se déforme, sous l'effet de la vibration, en une ellipse ayant un grand axe et un petit axe qui sont perpendiculaires à l'axe polaire du résonateur. Une mesure d'angle peut être effectuée par détection d'une orientation angulaire d'un de ces axes caractéristiques (ou axe de vibration) autour de l'axe polaire du résonateur (angle électrique). Le résonateur est ici hémisphérique (gyroscope de type GRH) mais peut avoir d'autres formes (gyroscope à colonnes par exemple).

L'accéléromètre 19 mesure les accélérations du coeur inertiel 3 dans la direction de l'axe Y et le gyroscope 9 les rotations du coeur inertiel 3 autour de l'axe Y. L'accéléromètre 20 mesure les accélérations du coeur inertiel 3 dans la direction de l'axe X et le gyroscope 10 les rotations du coeur inertiel 3 autour de l'axe X. L'accéléromètre 21 mesure les accélérations du coeur inertiel 3 dans la direction de l'axe Z et le gyroscope 11 les rotations du coeur inertiel 3 autour de l'axe Z. Il est alors possible de calculer des accélérations du véhicule selon les axes du référentiel inertiel, par déduction des accélérations mesurées puis, par intégration, la vitesse et, par double intégration, la position du véhicule dans le référentiel inertiel.

Le carrousel 2 est monté sur la plateforme 1 pour pivoter autour d'un axe de pivotement 4. A cette fin, le carrousel 2 est solidaire d'une broche suspendue sur des paliers magnétiques pour limiter les frottements. Un moteur 5 permet de faire tourner le carrousel 2. L'axe de pivotement 4 n'est pas aligné avec les axes sensibles des gyroscopes et est ici distinct d'une trisectrice des axes sensibles (X, Y, Z). Plus précisément, l'axe de pivotement 4 est tel que les gyroscopes 9, 10, 11 aient des erreurs n'apparaissant pas à des fréquences identiques, les fréquences d'apparition des erreurs des gyroscopes n'étant pas des harmoniques les unes des autres. L'axe de pivotement 4 forme ici un angle de 35° à 40° environ avec la trisectrice des axes sensibles.

Un codeur 6 est monté sur la plateforme 1 pour détecter la position angulaire de la broche.

Le dispositif de navigation comprend une unité de commande, schématisée en 50, programmée pour piloter le coeur inertiel 3 et mettre en oeuvre le procédé de l'invention.

L'unité de commande 50 est reliée aux capteurs inertiels, au codeur 6 et au moteur 5 de pivotement du carrousel 2 pour commander ceux-ci. L'unité de commande 50 est reliée, de façon connue en elle-même, à des transducteurs électrostatiques formant des actionneurs et des détecteurs associés aux résonateurs pour former des moyens de mise en vibration des résonateurs et de réglage d'une orientation angulaire d'un axe de la vibration autour de l'axe sensible. Le réglage de l'orientation angulaire de l'axe de la vibration autour de l'axe sensible est obtenu par une commande dite de précession.

L'unité de commande 50 est agencée pour animer le carrousel d'un mouvement de pivotement alterné.

L'unité de commande 50 est également programmée pour effectuer des mesures angulaires au moyen des gyroscopes 9, 10, 11 et des mesures accélérométriques au moyen des accéléromètres 19, 20, 21 pendant le pivotement du carrousel 2.

Le procédé mis en oeuvre par l'unité de commande 50 comprend plus précisément les étapes de :
- depuis une première position, faire pivoter le coeur inertiel 3 vers une deuxième position autour d'un axe de pivotement non aligné avec les axes sensibles ni avec une trisectrice desdits axes sensibles,
- effectuer entre la première et la deuxième position des mesures de l'orientation angulaire de l'axe de vibration avec chaque gyroscope 9, 10, 11, l'orientation angulaire étant laissée libre,
- ramener le coeur inertiel dans la première position,
- régler l'orientation angulaire de l'axe de vibration de chaque gyroscope à une valeur correspondant à la deuxième position,
- faire pivoter le coeur inertiel 3 vers la deuxième position autour de l'axe de pivotement 4,
- effectuer entre la première et la deuxième position des mesures de l'orientation angulaire de l'axe de vibration avec chaque gyroscope 9, 10, 11, l'orientation angulaire étant laissée libre,
- calibrer le coeur inertiel en fonction des mesures effectuées.

Cette alternance de pivotements et de réglage de l'angle électrique est réalisée jusqu'à ce que l'angle électrique ait une valeur égale au minimum à 180°.

Comme l'orientation de l'axe de pivotement 4 par rapport aux gyroscopes 9, 10, 11 est choisie pour que les gyroscopes 9, 10, 11 aient des erreurs n'apparaissant pas à des fréquences identiques et que les fréquences d'apparition des erreurs des gyroscopes 9, 10, 11 ne soient pas des harmoniques les unes des autres, il est possible de réaliser une phase de calibration particulièrement efficace au cours de laquelle les gyroscopes 9, 10, 11 responsables des erreurs sont identifiés en fonction de la fréquence d'apparition de celles-ci. Il est ainsi réalisé une affectation de chaque erreur détectée au gyroscope 9, 10, 11 correspondant. Les mesures provenant de chaque gyroscope 9, 10, 11 peuvent ainsi être corrigées afin d'améliorer la précision de la centrale inertielle.

Lorsque la calibration s'effectue alors que le véhicule est en mouvement, on effectue, entre la première et la deuxième position, des mesures de l'orientation angulaire de l'axe de vibration avec chaque gyroscope et des mesures accélérométriques au moyen des accéléromètres. Les mesures accélérométriques permettent de déterminer les dérives entraînant des erreurs de vitesse ou de position. Pour ce faire, les mesures des accéléromètres et des gyroscopes sont comparées à une vitesse ou position de référence en vue d'observer les paramètres de fonctionnement des gyroscopes.

Lors de la calibration, le véhicule peut être immobile et le carrousel 2 est positionné pour que l'axe de pivotement 4 coïncide avec un axe vertical. Les erreurs qui seraient introduites peuvent plus facilement être compensées car en théorie il ne doit pas y avoir de mouvement détecté selon le plan horizontal.

Lors de la calibration, le véhicule peut aussi être en mouvement. En effet, si ce mouvement est mesuré par un autre moyen (Loch, GPS,...), il est également possible de compenser les erreurs apparaissant dans le plan horizontal.

Lors de la navigation, il est possible de :
- faire pivoter le carrousel 2 autour de l'axe de pivotement 4,
- effectuer des mesures avec chaque gyroscope 9, 10, 11 pendant le pivotement du carrousel 2.

La fréquence de pivotement est choisie pour permettre un moyennage des erreurs des gyroscopes sur un horizon temporel, c'est à dire à un minimum sur la densité spectrale d'erreur des gyroscopes 9, 10, 11.

On comprend que, lors de la phase de navigation, le pivotement du carrousel 2 permet de moyenner les erreurs des gyroscopes 9, 10, 11 dès lors que la fréquence de pivotement choisie est supérieure (par exemple dans un rapport 3) à la dynamique du porteur. Le moyennage de la projection des dérives de chacun des gyroscopes suivant l'axe de pivotement se produira à la fréquence correspondant à une révolution de leurs angles électriques respectifs. Le moyennage de la dérive de chacun des gyroscopes suivant le plan perpendiculaire à l'axe de pivotement se produira à une fréquence à la fois sous-multiple des fréquences d'évolution des angles électriques de chacun des gyroscopes et sous-multiple de la fréquence de l'axe de pivotement.

En variante, le carrousel 2 peut également être positionné dans le véhicule pour que l'axe de pivotement soit sensiblement horizontal lorsque le véhicule est au sol. En phase de navigation, cette position de l'axe de pivotement est avantageuse car le pivotement du carrousel 2 n'affecte alors pas la détermination du cap, ce qui rend inutile de disposer d'un codeur 6 très précis pour détecter l'angle de pivotement des gyroscopes 9, 10, 11 par rapport au véhicule.

Un mouvement de rotation alterné permet d'éliminer les erreurs dues au facteur d'échelle. De ce point de vue, un mouvement de pivotement alterné est plus intéressant qu'un mouvement de pivotement continu puisqu'il ne fait pas peser de contraintes sur la qualité du facteur d'échelle du trièdre gyroscopique. En revanche, il existe un risque que le mouvement de pivotement du carrousel 2 corresponde au mouvement du véhicule porteur. Ce risque disparaît si l'on prend soin de commander un mouvement de pivotement de dynamique supérieure (par exemple au moins dans un rapport 3) à la dynamique du mouvement du porteur. On notera que l'opération de mesure effectuée par les gyroscopes 9, 10, 11 peut être soit continue soit répétée.

Bien entendu, l'invention n'est pas limitée aux modes de réalisation décrits mais englobe toute variante entrant dans le champ de l'invention telle que définie par les revendications.

En particulier, on pourra choisir une orientation différente de l'axe de pivotement 4. Par exemple, en phase de navigation, on peut choisir d'orienter verticalement l'axe de pivotement 4. Il sera alors préférable de compenser les erreurs de cap dues au facteur d'échelle par un autre système de navigation tel qu'un système de positionnement par satellites de type GPS. Il sera également préférable d'animer le carrousel 2 d'un mouvement de pivotement alterné.

La centrale inertielle peut ne pas comprendre d'accéléromètres par exemple pour une utilisation sur un satellite.

En variante, les gyroscopes et accéléromètres ne sont pas alignés. Plus précisément, un accéléromètre est aligné avec l'axe de retournement et les deux autres accéléromètres lui sont orthogonaux. Il y a donc un dépointage entre le trièdre formé par les accéléromètres et le trièdre formé par les gyromètres. Cela permet un calibrage aisé de deux des trois accéléromètres.

En variante également, il est prévu un ou des paliers entre la première et la deuxième positions, paliers pendant lesquels le pivotement du coeur est interrompu mais les mesures sont poursuivies.

Selon une autre variante de réalisation, le carrousel 2 est associé à des moyens permettant de positionner l'axe de pivotement du carrousel selon deux orientations selon que la centrale inertielle est en phase de calibration ou en phase de navigation.

## Revendications

1. Procédé de calibration d'une centrale inertielle comportant un coeur inertiel (3) comportant trois gyroscopes (9, 10, 11) montés relativement les uns aux autres pour avoir des axes sensibles (X, Y, Z) sensiblement perpendiculaires les uns aux autres, les gyroscopes étant des gyroscopes axisymétriques vibrants reliés à des moyens de leur mise en vibration et de réglage d'une orientation angulaire d'un axe de la vibration autour de l'axe sensible, **caractérisé en ce que** le procédé comprend les étapes de :
- depuis une première position, faire pivoter le coeur inertiel (3) vers une deuxième position autour d'un axe de pivotement (4) non aligné avec les axes sensibles ni avec une trisectrice desdits axes sensibles, les gyroscopes (9, 10, 11) ayant des erreurs n'apparaissant pas à des fréquences identiques,
- effectuer entre la première position et la deuxième position des mesures de l'orientation angulaire de l'axe de vibration avec chaque gyroscope (9, 10, 11), l'orientation angulaire étant laissée libre,
- ramener le coeur inertiel dans la première position,
- régler l'orientation angulaire de l'axe de vibration de chaque gyroscope à une valeur correspondant à la deuxième position,
- faire pivoter le coeur inertiel (3) vers la deuxième position autour de l'axe de pivotement (4),
- effectuer des mesures de l'orientation angulaire de l'axe de vibration avec chaque gyroscope (9, 10, 11) pendant le pivotement du coeur inertiel, l'orientation angulaire étant laissée libre pendant le pivotement,
- calibrer le coeur inertiel en fonction des mesures effectuées.

2. Procédé selon la revendication 1, dans lequel une alternance de pivotements, de paliers et de réglage de l'angle électrique est réalisée jusqu'à ce que l'angle électrique ait un débattement durant la calibration d'une valeur supérieure à 180°.

3. Procédé selon la revendication 1, dans lequel les fréquences d'apparition des erreurs des gyroscopes ne sont pas des harmoniques les unes des autres.

4. Procédé selon la revendication 3, dans lequel l'axe de pivotement (4) forme un angle de 35° à 40° environ avec la trisectrice des axes sensibles.

## Patentansprüche

1. Verfahren zur Kalibrierung einer inertialen Messeinheit, umfassend einen Trägheitskern (3), der drei Gyroskope (9, 10, 11) umfasst, die relativ zueinander derart angebracht sind, dass sie empfindliche Achsen (X, Y, Z) haben, die im Wesentlichen senkrecht zueinander sind, wobei die Gyroskope schwingende achsensymmetrische Gyroskope sind, die mit Mitteln zu deren In-Schwingung-Versetzen und zum Einstellen einer Winkelausrichtung einer Schwingungsachse um die empfindliche Ache verbunden sind, **dadurch gekennzeichnet, dass** das Verfahren die Schritte umfasst:
- ab einer ersten Position Veranlassen des Schwenkens des Trägheitskerns (3) in Richtung einer zweiten Position um eine Schwenkachse (4), die weder mit den empfindlichen Achsen ausgerichtet ist, noch mit einer Trisektrix der genannten empfindlichen Achsen, wobei die Gyroskope (9, 10, 11) Fehler haben, die nicht bei identischen Frequenzen auftreten,
- Durchführen zwischen der ersten Position und der zweiten Position von Messungen der Winkelausrichtung der Schwingungsachse mit jedem Gyroskop (9, 10, 11), wobei diese Winkelausrichtung freigestellt ist,
- Zurückbringen des Trägheitskerns in die erste Position,
- Einstellen der Winkelausrichtung der Schwingungsachse jedes Gyroskops auf einen Wert, der der zweiten Position entspricht,
- Veranlassen des Schwenkens des Trägheitskerns (3) in Richtung der zweiten Position um die Schwenkachse (4),
- Durchführen von Messungen der Winkelausrichtung der Schwingungsachse mit jedem Gyroskop (9, 10, 11) während des Schwenkens des Trägheitskerns, wobei die Winkelausrichtung während des Schwenkens freigestellt ist,
- Kalibrieren des Trägheitskerns in Abhängigkeit der durchgeführten Messungen.

2. Verfahren nach Anspruch 1, bei dem ein Wechsel aus Schwenkungen, Stabilitätszeiten und Einstellungen des elektrischen Winkels durchgeführt wird, bis der elektrische Winkel während der Kalibrierung einen Bereich mit einem Wert hat, der größer als 180° ist.

3. Verfahren nach Anspruch 1, bei dem die Frequenzen des Auftretens der Fehler der Gyroskope keine Harmonischen voneinander sind.

4. Verfahren nach Anspruch 3, bei dem die Schwenkachse (4) einen Winkel von ungefähr 35° bis 40° mit der Trisektrix der empfindlichen Achsen bildet.

## Claims

1. A method of calibrating an inertial unit comprising an inertial core (3) having three gyros (9, 10, 11) mounted relative to one another so as to have sensing axes (X, Y, Z) that are substantially mutually perpendicular, the gyros being vibratory axisymmetric gyros connected to means for setting them into vibration and for adjusting an angular orientation of a vibration axis about the sensing axis, the method being **characterized in that** it comprises the steps of:
• starting from a first position, causing the inertial core (3) to pivot towards a second position about a pivot axis (4) that is not in alignment with the sensing axes and that is not in alignment with a trisector of said sensing axes, the gyros (9, 10, 11) having errors that appear at frequencies that are not identical;
- between the first and second positions, taking measurements of the angular orientation of the vibration axis of each gyro (9, 10, 11), with the angular orientation being left free;
- returning the inertial core to the first position;
- adjusting the angular orientation of the vibration axis of each gyro to a value corresponding to the second position;
- causing the inertial core (3) to pivot towards the second position about the pivot axis (4);
- taking measurements of the angular orientation of the vibration axis of each gyro (9, 10, 11) during pivoting of the inertial core, angular orientation being left free during pivoting; and
- calibrating the inertial core as a function of the measurements taken.

2. A method according to claim 1, wherein pivoting movements, pauses, and adjustments of the electrical angle are alternated until the electrical angle varies during calibration by a value that is greater than 180°.

3. A method according to claim 1, wherein the frequencies at which gyroscope errors appear not being harmonics of one another.

4. A method according to claim 3, wherein the pivot axis (4) is at an angle of about 35° to 40° with the trisector of the sensing axes.
